# EUROPEAN PATENT APPLICATION

(11) **EP 1 125 617 A2**
(43) Date of publication of application: **22.08.2001**
(21) Application number: 01103952.6
(22) Date of filing: 19.02.2001
(51) Int. Cl.: A63F 13/12

(54) **Video game launching server, and network-based video gaming system and method using the same**

(30) Priority: 18.02.2000 KR 2000007807; 28.04.2000 KR 2000022735
(71) Applicant: ICOMMSOFT Co., LTD., Seoul 135-220 (KR)
(72) Inventor: Choe, Hyeog, Seoul (KR)
(74) Representative: Lorenz, Werner, Dr.-Ing.

(57) **Abstract**

Disclosed is a video game launching server, and a network-based video gaming system and method using the same. In accordance with an aspect of the present invention, the network-based video gaming method uses a video game apparatus having video gaming machines used by individual users, and a display device connected to each video gaming machine to display the process of a video game, the method including the steps of: (a) the users operating the video gaming machines to have direct access to one another over the network; and (b) the users exchanging text and voice messages with one another and playing the game.

The present invention allows the users to have access to the network with the video gaming machines and exchange text and voice messages with one another while playing the game.

## Description

### BACKGROUND OF THE INVENTION

### (a) Field of the Invention

The present invention relates to a video game launching server, and a network-based video gaming system and method using the same. More specifically, the present invention relates to a video game launching server and a network-based video gaming system and method using the same by which a plurality of users are allowed to have direct access to the video game launching server over the Internet and to play a video game at the same time.

### (b) Description of the Related Art

The games called "video games" are run by video gaming machines and are enjoyed by game players all over the world.

Conventionally, video games are designed to allow one or at most two game players to play the video game alone or have a man-to-man fight on a television or monitor using a video gaming machine.

Unfortunately, such a conventional video game method places a limitation on the number of game players concerned so that multiple users cannot play a video game of common interest simultaneously.

### SUMMARY OF THE INVENTION

It is an object of the present invention to solve the problem and to allow multiple users to have access to a network via video gaming machines, and exchange text and voice messages with one another while playing a video game.

In one aspect of the present invention, there is provided a video game launching server including: a game room creation module for creating and closing a game room as a virtual space as requested by a user so that the user can have access to a network and join a video game with other multiple users; a game support module for running a game application program to interconnect video gaming machines over the network and allow the multiple users to mutually play the game in the game room; a game statistic module for storing and restoring result information of the game played by the individual users during the game or after termination of the game; a voice game support module for allowing the users playing the game to exchange voice messages with one another; and a message exchange module for allowing the users playing the game to exchange text messages with one another.

In another aspect of the present invention, there is provided a network-based video gaming system which has video gaming machines used by individual users and a display device connected to each video gaming machine to display the process of a video game, the video gaming system including: a video game server for providing a physical connection between the video gaming machines over the network, and allowing the users to exchange text and voice messages with one another while playing the game; and a database server for storing user information and game results of the individual users as requested by the video game server, while the multiple users have access to the database server.

In another aspect of the present invention, there is provided a network-based video gaming method which uses a video game apparatus having video gaming machines used by individual users, and a display device connected to each video gaming machine to display the process of a video game, the video gaming method including the steps of: (a) the users operating the video gaming machines to have direct access to one another over the network; and (b) the users exchanging text and voice messages with one another and playing the game.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 is a schematic block diagram of a video gaming system according to an embodiment of the present invention; and
FIG. 2 is a flow chart illustrating a video gaming method according to an embodiment of the present invention.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

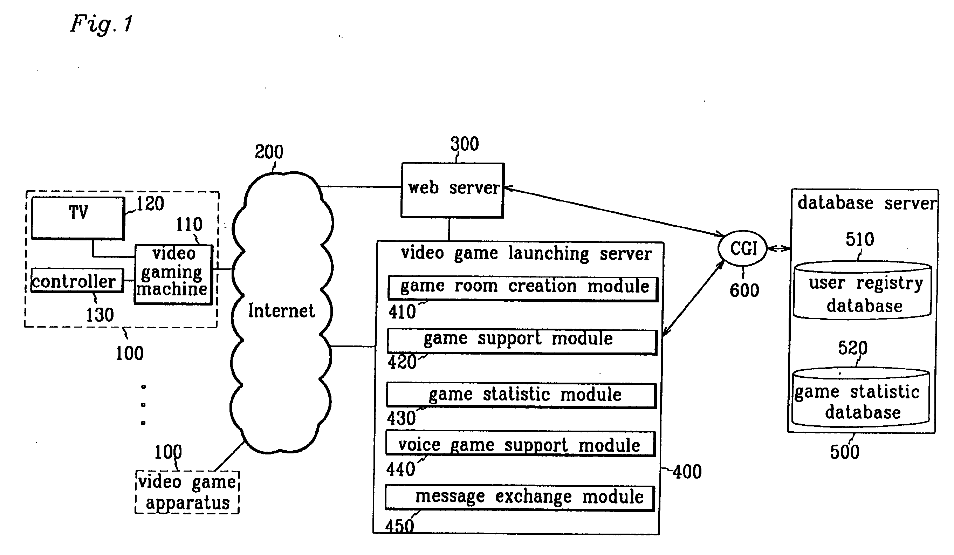

FIG. 1 is a schematic block diagram of a video gaming system according to an embodiment of the present invention.

As shown in FIG. 1, the video gaming system according to the embodiment of the present invention comprises a video game apparatus 100 that includes a television 120, a controller 130 connected to the television 120 for control of a screen on the television 120, and a video gaming machine 110 for allowing users to play a video game; an Internet 200 that has a physical connection to the video game apparatus 100 and allows the users to exchange selected information with one another; a web server 300 that displays a web page on the Internet 200 and processes access information based on the access of the individual users, allowing the users to play the video game; a video game launching server 400 that receives information about the video game from the web server 300 and allows multiple users to play the video game simultaneously; a database server 500 that stores access information and game results of the individual users; and a CGI (Common Gateway Interface) 600 that restores information requested by the video game launching server 400 from the database server 500 and sends the result information to the video game launching server 400.

The video game apparatus 100 comprises a video gaming machine 110 that enables the individual users to have direct access to the Internet 200 and play various video games; a television (hereinafter, referred to as "TV") 110 that displays play of the game played by the users; and a controller 130 having a control unit connected to the video gaming machine and allowing the users to play the game.

The video game apparatus 100 may be connected to the Internet 200, if not specifically limited to, via a dedicated line, a LAN (Local Area Network) or an ISP (Internet Service Provider).

The video game launching server 400 comprises a game room creation module 410 that creates and closes a game room, i.e., virtual gaming space, as requested by one of the multiple users so that the user can have access to other users to play the video game simultaneously; a game support module 420 that supports a game program for allowing multiple users to play the game simultaneously; a game statistic module 430 that stores result information of the game played by the individual users in a game statistic database 520 during the game or after the termination of the game, or restores the stored result information from the game statistic database 520; a voice game support module 440 that allows the users playing the game to exchange voice messages with one another; and a message exchange module 450 that allows the users playing the game to exchange text messages with one another.

The respective modules of the video game launching server 400 are not specifically limited and may be devices carrying out the individual functions, or integrated as a single program.

The database server 500 comprises a user registry database 510 that stores ID and password information of the individual users joining the game, and information about the game room created by one of the users; and a game statistic database 520 that stores game result information of the individual users concerned during the game or after the termination of the game.

The respective databases of the database server 500 are not specifically limited and may be information storage devices carrying out the individual functions.

Hereinafter, a detailed description will be given as to the operation of the network-based video gaming system according to the embodiment of the present invention with reference to the accompanying drawings.

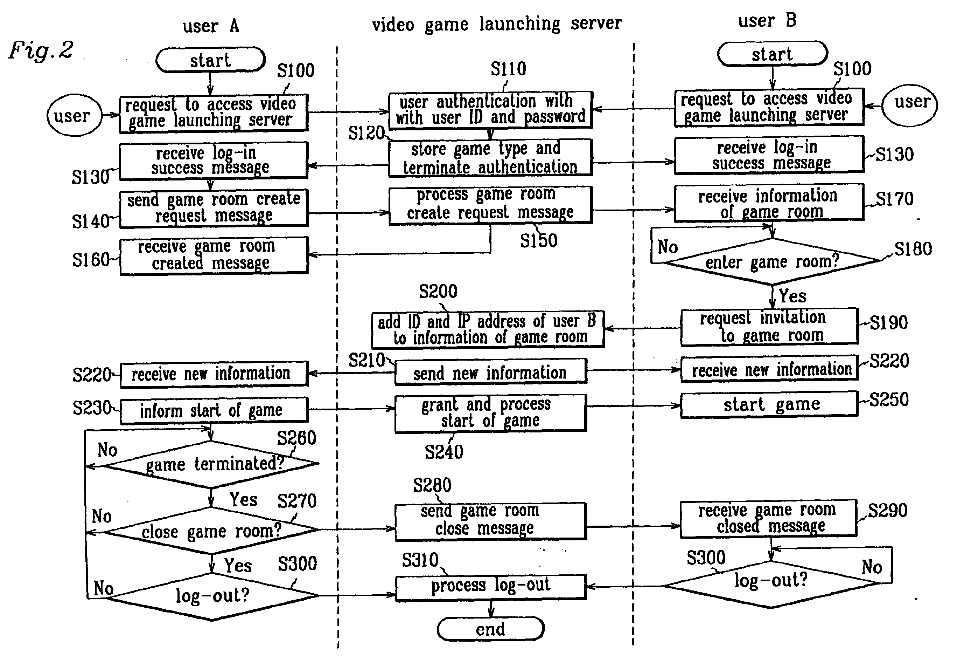

FIG. 2 is a flow chart illustrating a video gaming method according to an embodiment of the present invention.

As shown in FIG. 2, as users A and B turn on the video gaming machine 110 to display a browser on the TV 120, they have access to the Internet 200. On the web page displayed on the browser, the users A and B enter user ID's, passwords, user IP addresses, and desired type of game to play, and they ask the web server 300 for access to the video game launching server 400, in step 100.

Upon receiving the user ID's and passwords, the web server 300 causes the CGI 600 to compare the received user ID's and passwords to those stored in the user registry database 510. The CGI 600 sends user authentication information to the web server 300, which then displays the user authentication information in the web page on the browser, in step S110. After completion of the user authentication, the web server 300 displays a web page indicating that users A and B have logged in successfully, and the users A and B receive a log-in success message on the web page, in step 130.

User A requests the video game launching server 400 to create a game room, in step 140. The video game launching server 400 causes the game room creation module 410 to receive a game room create request message from the user A and creates a multi-game room for the user A and another users, in step 150. Meanwhile, the user A sets the attributes of the game room to be created, such as whether a voice chat service is served, the number of game players, the title of the room, and whether the room is public or private. The game room creation module 410 then creates a game room based on the information entered by the user A.

The game room creation module 410 sends a message indicating that the game room has been created to the TV 120 via the video gaming machine 110, and the user A then receives the message, in step 160. Meanwhile, the game room creation module 410 sends game room create information entered by the user A to the user B. The user B receives the game room create information, in step 170, and determines whether to join the game, in step 180. If the user B wants to join the game, he/she marks the web page displayed on his/her TV 120 to request entrance to the game room, in step 190. Upon receiving an entrance request message from the user B, the game room creation module 410 adds the ID and IP address information of the user B to the game room information created by the user A and stores it in the user registry database 510, in step 200. The game room creation module 410 sends the users A and B revised information based on the newly entered user information about the users A and B, in step 210. Then the users A and B receive the revised information, in step 220.

When the user A who created the game room chooses a game start button on the screen to inform that the game is started, in step 230, the game room creation module 410 grants the game start and causes the game support module 420 to initiate the game played by the users who entered the game room, in step 240. User B who also chooses the game start button starts to play the game, in step 250.

During the game, the user A can send a message to another user playing the game as a member of the same team, e.g., user B via a microphone (not shown). That is, a voice signal message sent by the user A is converted to a voice file at the voice game support module 440 and then directly sent in a compressed format to the IP address of another user stored in the user registry database 510. The compressed voice file sent by the user A is decompressed at the video gaming machine 110 of the user B and output to a speaker (not shown). The voice information generated during the game affects neither the game sounds nor the play because the voices are output to the speaker. Also, the message sent by the user A can be transferred directly to another user over the Internet 200 rather than by the video game launching server 400, which minimizes a load on the video game launching server 400 and permits an efficient operation of the video game launching server 400.

If the user does not choose the voice send mode, the message may be sent in the form of a text message. When the user A intends to send a text message to the user B and enters a text with a keyboard (not shown) connected to the video gaming machine 110, the message exchange module 450 searches for the IP address of the user B stored in the user registry database 510 and sends the text to the TV 120 of the video game apparatus of the user B to display the text message.

When the game ends, the user A determines in step 260 whether to discontinue play, and decides whether to close the game room in step 270. When the user A decides to close the game room, the game room creation module 410 receives game room close information from the user A and sends it to the user B, in step 280. Then the user B receives the game room close information and decides to log out, in step 300. As the user A closes the game room and decides to log out, in step 300, the game room creation module 410 allows the users A and B to log out and sends the log-out result information to the users A and B, in step 310. Following the log-out, the game statistic module 430 stores game result information of each user in the game statistic database 520 and displays the records of the previous plays when the individual user resumes the game.

The individual users may resume the game in the above-described procedures.

While this invention has been described in connection with what is presently considered to be the most practical and preferred embodiment, it is to be understood that the invention is not limited to the disclosed embodiments, but, on the contrary, is intended to cover various modifications and equivalent arrangements included within the spirit and scope of the appended claims.

As described above, the video game launching server, and the network-based video gaming system and method using the server according to the present invention supports not only one-player and man-to-man video games but also multi-player video games in which multiple players join in, on the network.

Also, the present invention allows the users to exchange voice messages as well as text messages with one another, and reduces time consumption in waiting for the start of the game.

Furthermore, the present invention connects multiple users to the network via the video game launching server to which the individual users can have access simultaneously, and allows the service providers to provide various types of services to the users on the network.

## Claims

1. A video game launching server comprising:
a game room creation module for creating and closing a game room as a virtual space as requested by a user so that the user can have access to a network and join a video game with other multiple users;
a game support module for running a game application program to interconnect video gaming machines over the network and allow the multiple users to mutually play the game in the game room;
a game statistic module for storing and restoring result information of the game played by the individual users during the game or after termination of the game;
a voice game support module for allowing the users playing the game to exchange voice messages with one another; and
a message exchange module for allowing the users playing the game to exchange text messages with one another.

2. A network-based video gaming system, which has video gaming machines used by individual users and a display device connected to each video gaming machine to display the process of a video game, the video gaming system comprising:
a video game server for providing a physical connection between the video gaming machines over the network, and allowing the users to exchange text and voice messages with one another while playing the game; and
a database server for storing user information and game results of the individual users as requested by the video game server, while the multiple users have access to the database server.

3. The network-based video gaming system as claimed in claim 2, wherein the video game server comprises:
a game room creation module for creating and closing a game room as a virtual space as requested by a user so that the user can join the video game with other multiple users;
a game support module for running a game program that allows the user to play the game simultaneously with other multiple users;
a game statistic module for storing and restoring result information of the game played by the individual users during the game or after termination of the game;
a voice game support module for allowing the users playing the game to exchange voice messages with one another; and
a message exchange module for allowing the users playing the game to exchange text messages with one another.

4. The network-based video gaming system as claimed in claim 2, wherein the database server comprises:
a user registry database for storing information about the users who join the game; and
a game statistic database for storing result information of the game played by the individual users during the game or after termination of the game.

5. A network-based video gaming method, which uses a video game apparatus having video gaming machines used by individual users, and a display device connected to each video gaming machine to display the process of a video game, the video gaming method comprising the steps of:
(a) the users operating the video gaming machines to have direct access to one another over the network; and
(b) the users exchanging text and voice messages with one another and playing the game.

6. The network-based video gaming method as claimed in claim 5, wherein the step (a) comprises the steps of:
causing one of the users to create a game room as a virtual space in which the users play the game simultaneously;
causing the user who created the game room to select information of the game room upon creation of the game room; and
sending the information of the game room to other users who want to join the game in the game room.

7. The network-based video gaming method as claimed in claim 5, wherein the step (b) comprises the steps of:
receiving the text and voice messages from the individual users who are playing the game in the game room; and
analyzing the received text and voice messages and sending them to the corresponding users.

8. The network-based video gaming method as claimed in claim 5, further comprising the step of storing the result information of the individual users in an information storage device after termination of the game, and sending it to the individual users resuming the game.

9. The network-based video gaming method as claimed in claim 5, further comprising the steps of:
causing the user who created the game room to close the game room after termination of the game; and
processing a log-out of the user when the user decides to close the game room.

10. A computer-readable storage medium storing a program comprising the steps of:
(a) multiple users operating video gaming machines to have direct access to one another over a network; and
(b) the users exchanging text and voice messages with one another and playing the game.

11. The computer-readable storage medium as claimed in claim 10, wherein the step (a) comprises the steps of:
causing one of the users to create a game room as a virtual space in which the users play the game simultaneously;
causing the user who created the game room to select information of the game room upon creation of the game room; and
sending the information of the game room to other users who want to join the game in the game room.

12. The computer-readable storage medium as claimed in claim 10, wherein the step (b) comprises the steps of:
receiving the text and voice messages from the individual users who are playing the game in the game room; and
analyzing the received text and voice messages and sending them to the corresponding users.

13. The computer-readable storage medium as claimed in claim 10, further comprising the step of storing the result information of the individual users in an information storage device after termination of the game, and sending it to the individual users resuming the game.

14. The computer-readable storage medium as claimed in claim 10, further comprising the steps of:
causing the user who created the game room to close the game room after termination of the game; and
processing a log-out of the user when the user decides to close the game room.
